(19) Europäisches Patentamt / European Patent Office / Office européen des brevets

(11) **EP 3 562 575 B1**

(12) **EUROPEAN PATENT SPECIFICATION**

(45) Date of publication and mention
of the grant of the patent:
**22.05.2024   Bulletin 2024/21**

(21) Application number: **17838132.3**

(22) Date of filing: **28.12.2017**

(51) International Patent Classification (IPC):
**B01D 67/00** *(2006.01)*        **B01D 69/02** *(2006.01)*
**B01D 71/68** *(2006.01)*

(52) Cooperative Patent Classification (CPC):
**B01D 71/68; B01D 67/0011; B01D 69/02;**
B01D 61/364; B01D 67/0016; B01D 2323/18;
B01D 2323/2187; B01D 2325/0212; B01D 2325/04

(86) International application number:
**PCT/EP2017/084712**

(87) International publication number:
**WO 2018/122308 (05.07.2018 Gazette 2018/27)**

(54) **ISOTROPIC POROUS MEMBRANE AND METHOD OF PREPARING THE SAME**

ISOTROPE PORÖSE MEMBRAN UND VERFAHREN ZUR HERSTELLUNG DAVON

MEMBRANE ISOTROPE POREUSE ET PROCÉDÉ DE PRÉPARATION ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2016   EP 16207648**

(43) Date of publication of application:
**06.11.2019   Bulletin 2019/45**

(73) Proprietor: **VITO NV (Vlaamse Instelling voor
Technologisch
Onderzoek NV)
2400 Mol (BE)**

(72) Inventors:
• **EYKENS, Lies
2400 Mol (BE)**
• **DOTREMONT, Chris
2400 Mol (BE)**
• **DE SITTER, Kristien
2400 Mol (BE)**

(74) Representative: **AWA Benelux
AWA Benelux SA
Tour & Taxis - Royal Depot box:216
Havenlaan 86c Avenue du Port
1000 Bruxelles (BE)**

(56) References cited:
**EP-A1- 2 609 992        KR-A- 20130 013 679
US-A1- 2005 011 834**

## Description

## Technical field

The present invention relates to porous polymeric membranes having an isotropic layer, particularly useful for membrane contactor applications, and to methods of preparing such membranes using the phase separation process.

## Background

Membrane contactors represent a technology in which a porous, hydrophobic (or in some cases hydrophilic) polymeric membrane is used to separate two streams. Depending on the application, the two streams are gaseous, liquid or one of each. The membrane itself offers no selectivity, but only creates an interface for mass transfer and/or reaction between two phases. Separation is based on the principle of phase equilibrium. All separation operations that are based on the mass transport between two contacting phases can be carried out by membrane contactors. These include, though are not limited to, traditional stripping, scrubbing, absorption, liquid-liquid operations, emulsification, crystallization and phase transfer catalysis. Different types of membrane contactors will be used depending on the specific application.

One such application is membrane distillation. Membrane distillation (MD) is a contactor application using a porous hydrophobic membrane for the separation of non-volatile inclusions from liquid streams. The porous structure should be designed for optimal vapor transport through the membrane, whereas the hydrophobicity is required to retain the liquid phase. By applying a vapor pressure difference over the membrane induced by a temperature difference or vacuum pressure at permeate side, a driving force is obtained over the membrane from the hot feed side to the cold permeate side. Membranes used in membrane distillation applications typically have a high bulk and surface porosity, with pore size between about 0.1 $\mu$m and about 1 $\mu$m, and an appropriate surface chemistry. In addition to these properties, the membranes typically have sufficient mechanical, thermal and chemical stability for the operational conditions used. Temperature up to 90°C can be used and a huge variety of chemicals, including salts, acid, base and macromolecules in very high concentrations can be present in the feed streams. Moreover, the membrane may not be wetted under the pressures occurring in the module. The pressure drop in a commercial MD module may reach up to 1 bar. To account for fluctuations in pressure, temperature, feed composition and long term effects, a minimum liquid entry pressure of 2.5 bar is recommended.

Most commonly, hydrophobic polytetrafluoroethylene (PTFE) membranes are used for membrane distillation. At low salinities, these membranes show high flux and energy efficiency. Nevertheless, the thickness is not optimized for the process at high salinities. Additionally, the non-woven or scrim support used to provide the mechanical strength for PTFE membranes is an additional resistance for the heat transfer in the channels, especially at high salinities, which is the main application of membrane distillation. Stretched membranes also tend to compact easily, which is problematic for full scale operation, where a pressure drop over the module can induce this compaction.

On the other hand, phase inverted (or phase separated) membranes would be an interesting alternative for PTFE in membrane distillation and other contactor applications due to their mechanical strength resisting compaction at elevated pressures and high bulk porosity. One drawback of the phase inverted membranes is that they have an asymmetric structure, with typically a dense skin layer with small surface porosity, whereas membranes for contactor applications should ideally have a higher surface porosity in order to maintain the flux through the membrane at acceptable levels.

It is known from US 6110369 to Ditter et al., 29 August 2000, to prepare membranes that include a region that is generally isotropic and a region that is substantially asymmetric. Generally isotropic (or the isotropic region), as used herein, means a region of generally constant pore size. The isotropic region extends from the skin of the membranes into the supporting substructure through greater than about 15% of the thickness of the membrane. For example, in a 125 $\mu$m membrane the isotropic region extends greater than about 25 $\mu$m from the skin into the supporting substructure. These membranes are prepared from homogeneous solutions which are cast as a film and exposed to humid air for a time sufficiently long enough to induce the formation of large surface pores, prior to quenching it in water.

Having an isotropic region extending from the skin is a feature useful for contactor applications, such as membrane distillation. Generally, the adjacent asymmetric region will have a larger pore size contributing to a lesser extent to the separating character of the membrane. However, the thickness of the isotropic region in the membranes prepared by the US 6110369 process is typically too small for the envisaged contactor applications.

EP 2609992 describes a microfiltration membrane comprising an asymmetric layer, an isometric layer, and an interface layer between the asymmetric layer and the isometric layer. Solutions including one or more polymers, a solvent and possibly a non-solvent are cast and are exposed to air after casting but before quenching. The air exposure time is typically in the range of from about 2 seconds to about 35 seconds. Typically, the air is humid (e.g., greater than about 60% relative humidity).

KR 2013-0013679 discloses a symmetric membrane containing a polysulfonated polymer and a manufacturing method thereof. The polysulfonated polymer membrane has less than 5% asymmetry, based on the pore size of a core layer and a surface layer of the membrane. A polymer solution is composed of a polysulfone polymer in an amount of 8 to 20% by weight, a hydrophilic pore-controlling agent in an amount of 10 to 30% by weight, and a residual solvent. The solution is cast on a support. After the casting, the solution is exposed to air for 5 seconds to 10 minutes by air injection maintained at a temperature of 20°C to 60° C and a relative humidity of 30% to 80% to form surface layer pores of the film. Next, the cast solution is immersed in a coagulation bath to solidify and peel off from the support.

## Summary

There is therefore a need in the art of providing phase inverted membranes having an improved porosity and pore size distribution, in order to enhance their usability in membrane contactor applications. There is a need in the art of providing phase inverted membranes with optimised properties with regard to membrane contactor applications, and membrane distillation in particular.

There is a need in the art of providing a method for preparing phase inverted membranes of the above type, allowing for better tuning membrane properties and structure to the intended applications. In particular, there is a need of providing a method for preparing membranes, allowing to improve the isotropic region of those membranes.

According to a first aspect of the invention, there is therefore provided a method of preparing a porous membrane, as set out in the appended claims. Methods comprise a step of forming a homogeneous solution comprising a polymer, a solvent and at least 0.5% by weight of an additive. The polymer content in the solution is at least 15% by weight. The solution is cast to form a cast layer. Methods according to the present aspect further comprise exposing the cast layer to a vapour phase to induce phase separation followed by immersing (quenching) the cast layer in a coagulation bath. The vapour phase is humid air. The humid air has a relative humidity of at least 70%, advantageously at least 80%. The temperature of the humid air is advantageously between 30°C and 80°C.

According to the present aspect, the additive has an average molecular mass of at least 100000 g/mole. The additive is an organic compound, in particular a hydrophilic polymer. Advantageously, the additive is a substance making the solution system less stable from a thermodynamic point of view. In particular, the solution has a coagulation value between 0.5% and 10% with respect to a mixture of 50% water and 50% of the solvent on weight basis. In other words, adding between 0.5% and 10% of the 50/50 water/solvent mixture to the solution will turn the homogeneous mixture turbid, i.e. immiscible. Therefore, addition of the additive to the solution will bring the solution close to the stability boundary. Subjecting such a solution to phase inversion, including an exposure to a vapour phase such as humid air surprisingly allows for obtaining membranes with large isotropic regions. Furthermore, these solutions allow for easily tuning membrane properties by simply adapting dope composition and vapour exposure parameters.

A porous membrane is described herein. The membrane is polymeric and is obtained or obtainable by the above methods. The membrane comprises a generally isotropic layer extending from a first outer surface through at least 50% of a thickness of the membrane. The isotropic layer is porous with a thickness of at least 50 $\mu$m and advantageously an average pore size ranging between 0.1 $\mu$m and 20 $\mu$m.

According to a second aspect of the invention, there is provided a use of membranes as described above in a membrane contactor process, in particular in a membrane distillation process, as set out in the appended claims. In these processes the membrane separates a first fluid from a second fluid and a vapour pressure difference is applied across the membrane.

Aspects of the invention will now be described in more detail with reference to the appended drawings, wherein same reference numerals illustrate same features.

## Brief description of the drawings

Figure 1 represents a ternary phase diagram of a polymer P, its solvent S and a non-solvent NS. The stability region of a P-S-NS mixture is bounded by the binodal curve BC, and the unstable region of the mixture is bounded by the spinodal curve SC.

Figure 2 represents a graph of the evolution of viscosity of a dope solution with increasing weight fraction of additive.

Figures 3 and 4 represent scanning electron microscope (SEM) images of the membrane obtained with the dope composition and coagulation parameters of experiment No. 11 of Table 3. Figure 3 shows a SEM image of the membrane cross section, whereas figure 4 shows a SEM image of the top surface (skin) of the membrane.

Figures 5 and 6 represent SEM images of the membrane obtained with the dope composition and coagulation parameters of experiment No. 3 of Table 3. Figure 5 shows a SEM image of the membrane cross section, whereas figure 6 shows a SEM image of the top surface (skin) of the membrane.

Figures 7 and 8 represent SEM images of the membrane obtained with the dope composition and coagulation parameters of experiment No. 6 of Table 3. Figure 7 shows a SEM image of the membrane cross section, whereas figure 8 shows a SEM image of the top surface (skin) of the membrane.

Figure 9 represents the evolution of maximum pore diameter as calculated with the bubble point test method with exposure time to humid air (vapour phase exposure), for two dope compositions PES1 and PES17 as listed in Table 3 and for different coagulation temperatures.

Figure 10 represents a SEM image of a cross section of the membrane obtaine in experiment No. 25 of Table 3.

Figure 11 shows a graph of the viscosity of an 18% PES, 9% Glycerol, 64% NMP and 9% PVP K90/copovidone VA64 solution for differing fractions of PVP K90 (expressed in % by weight of dope solution). The remainder of the 9% PVP/copovidone fraction is formed by VA64.

Figure 12 shows results of compression tests for two commercial membranes and one membrane according to aspects described herein. The relative compression on initial thickness basis is shown versus applied differential pressure.

Figures 13 and 14 represent flux and energy efficiency for a membrane according to aspects described herein, compared to a commercial PE membrane, for a membrane distillation application. Process conditions are: feed temperature $T_{feed}$ = 60°C, permeate (distillate) temperature $T_{permeate}$ = 45°C, feed rate v = 60 l/h. Figure 13 shows flux for different salinity concentrations. Figure 14 shows energy efficiency for different flux concentrations.

Figure 15 shows a membrane distillation unit.

## Detailed description

In one aspect, methods of preparing a porous membrane are provided. Porous membranes are prepared according to the methods described herein based on the phase separation, or phase inversion, process. The term phase separation, or phase inversion, refers to a number of known processes, e.g. described in the handbook by M. Mulder, Basic Principles of Membrane Technology, Second Edition, Kluwer Academic Publishers, 1996. The phase inversion process is based on a transition between two phases, induced by a change of polymer solubility. Starting from a homogeneous polymer solution (referred to as a dope solution), a change in composition or conditions induces demixing of the solution into a polymer rich and a polymer poor phase. Upon further separation, the solubility of the polymer is reduced and a solid phase with specific morphology will be formed. The phase separation and precipitation can be induced in different ways, but in the context of the present description, only vapor induced phase separation followed by immersion precipitation in a coagulation bath is considered. That is, a cast polymer solution is exposed to a vapor phase for a defined time period. The vapor phase comprises a non-solvent, typically water, e.g. as humid air, which is taken up by the solution upon contact. Next, the casting solution is immersed in a coagulation bath containing the non-solvent, resulting in solvent-nonsolvent exchange.

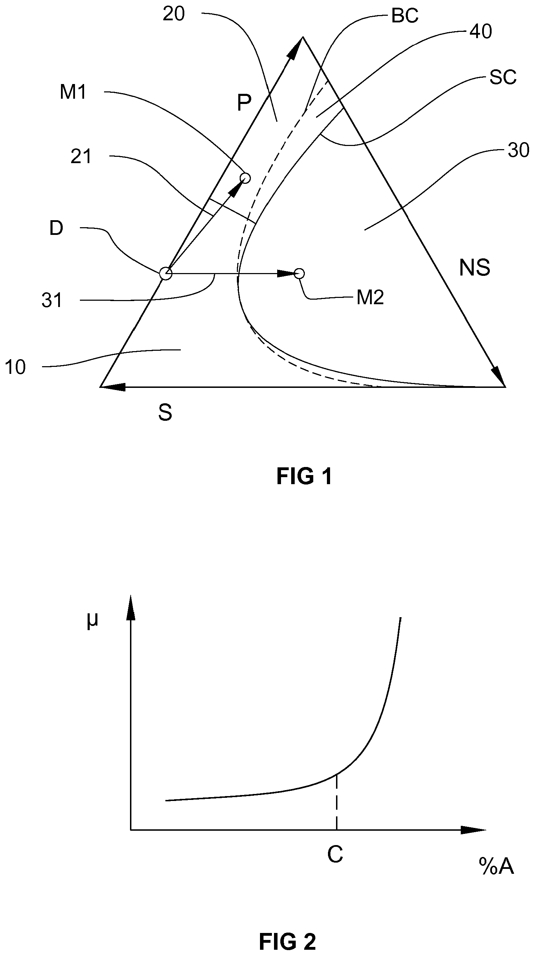

The membrane structure so obtained typically comprises open, i.e. interconnected pores embedded in a reticulate network of solid polymer. Even though it is known that the structure of the membranes can be controlled by the process conditions, the present inventors have now found particular compositions and process conditions allowing for obtaining membranes with isotropic regions of heretofore unseen thicknesses. In particular, membranes according to aspects described herein can be fully isotropic throughout their thickness. Without wishing to be bound by theory, present inventors have been able to steering the path in the ternary phase diagram of polymer, solvent and non-solvent in turn allowing for tuning the pore structure of the membrane to desired specifications. Referring to Fig. 1, the ternary phase diagram of a polymer P, a solvent S and non-solvent NS comprises different regions. The regions are defined by a few important boundary curves. The spinodal curve SC marks the boundary of the unstable region 30, in which the polymer solution is immiscible with the non-solvent. The binodal curve BC marks the stable regions 10 and 20. Region 10 is the miscible region, in which the three components P, S and NS are fully miscible. Region 20 is the gel region. The region between the binodal and spinodal curves is the metastable region 40.

Starting from point D, representing the original dope composition of a polymer P in solution with a solvent S, the system can evolve via different paths upon addition of non-solvent NS. Along path 21, the polymer P aggregates and evolves towards the gel region 20, forming a gel M1. Via path 21, a dense top layer is formed, called the skin. The skin imposes an additional resistance to the diffusion of solvent and non-solvent and underneath this skin a layer with macrovoids is formed, resulting in an asymmetric membrane. Along path 31, solvent S and non-solvent NS are exchanged in about the same rate and the system evolves towards the spinodal curve SC. In region 30, the dope solution undergoes spinodal decomposition, forming interconnected microstructures of the polymer poor and polymer rich phases. The membrane obtained at M2 has a generally isotropic structure, which is highly beneficial for the contactor applications described above. Present inventors have now found ways for controlling the path that is most favored under certain experimental conditions, allowing for tuning the membrane towards the preferred membrane morphology.

It has now been found that the addition of a large molecular mass additive to the dope solution allows for shifting the spinodal curve to the left in Fig. 1. This favors path 31 over path 21 and allows for obtaining large isotropic layers within the membranes. These isotropic layers furthermore extend from the top surface. These membranes therefore do not comprise any dense skin and can be referred to as symmetric membranes.

Methods according to aspects of the invention comprise a step of forming a solution comprising a polymer, a solvent, and an additive. The polymer is advantageously polymer comprising a plurality of sulfone (functional groups), in other words a polysulfone compound. Preferred polysulfone compounds satisfy the formula $R_1$-$SO_2$-$R_2$, wherein $R_1$ and $R_2$ can be the same or different groups such as alkanes, alkenes, alkynes, aryls, alkyls, alkoxys, aldehydes, anhydrides, esters, ethers, and mixtures thereof, each such group advantageously having fifty or fewer carbon atoms and including both straight-chained and branched-chained structures. Suitable examples of polysulfone compounds include polysulfone (PSU), polyethersulfone (PESU), sulfonated polyethersulfone and modified versions. The polysulfone compound can be a grafted variant of the above polymers, or a copolymer of any combination of sulfone monomers.

According to an alternative aspect, the polymer can be polyvinylidene fluoride (PVDF), polyvinylidene chloride (PVDC), a grafted variant of them, or a copolymer of either one of the polymers. The polymer can be polyvinyl chloride (PVC), chlorinated polyvinyl chloride (CPVC), a grafted variant of them, or a copolymer of either one of the polymers. The polymer can be a polymer of the polyaryletherketone (PAEK) family, such as polyether ether ketone (PEEK), a grafted variant of any of these polymers, such as sulfonated polyether ether ketone (PEEK-WC), or a copolymer of any one of these polymers. The polymer can be polychlorotrifluoroethene (PCTFE), polyether imide (PEI), polyimide (PI), polyamide imide (PAI), polyacrylonitrile (PAN), polyurethane (PUR), in particular a thermoplastic polyurethane (PUR), a grafted variant of any of these polymers, or a copolymer of any one of these polymers. The polymer can be polyphenylene sulphide (PPS), cellulose acetate (CA), cellulose triacetate (CTA), a grafted variant of any of these polymers, or a copolymer of any of these polymers. The copolymers as indicated above can be suitable copolymers of the indicated polymer with any one of polyvinyl chloride (PVC), polymethyl methacrylate (PMMA), polycarbonate (PC), cyanoacrylate, cellulose triacetate (CTA), polyphenylene sulphide (PPS), polystyrene (PS), polyvinyl alcohol (PVA), polyvinyl acetate (PVAc), and polyamides (PA) such as polycaprolactam (nylon 6) and nylon-6,6. The polymer can be a suitable blend of two or more of the above listed polymers.

The solution has a high polymer content, e.g. the content of the above polymer in the solution is at least 15% by weight, advantageously at least 16% by weight. The polymer content can amount up to 30% by weight of the solution, advantageously up to 28% by weight.

Suitable solvents for carrying out aspects of the invention are advantageously aprotic solvents and are advantageously one or more of: dimethylformamide (DMF), dimethylsulfoxide (DMSO), dimethylacetate (DMAc), N-methyl-2-pyrrolidone (NMP), and N-ethyl-2-pyrrolidone (NEP), since these allow for being easily removed from a membrane forming solution by phase separation. Additional or alternative suitable solvents, possibly for use in a solvent:co-solvent system in the membrane forming solution are: tetrahydrofuran (THF), tetramethyl urea (TMU), N,N-dimethylpropylene urea (DMPU), trimethyl phosphate (TMP), triethyl phosphate (TEP), tri-n-butyl phosphate (TBP), tricresyl phosphate (TCP), acetone, aniline. Ketones, such as methyl ethyl ketone (MEK) can be suitable solvents as well. Chlorinated hydrocarbons, such as methylene chloride, dichloromethane, and trichloroethylene can be suitable solvents as well. Tamisolve® NxG solvent (Taminco bvba, Belgium) can be suitable as well. It will be convenient to note that those skilled in the art can select a suitable solvent for a predetermined combination of first and second polymer compounds based on readily available solubility data. The amount of solvent (or mixture of solvents) in the solution is advantageously at least 25% by weight, advantageously at least 35% by weight, advantageously at least 45% by weight.

The solution is homogeneous, e.g. it is optically transparent. In other words, the solution is thermodynamically stable, meaning that in the ternary phase diagram, the solution lies to the left of the binodal curve BC as in Fig. 1, i.e. in region 10. The solution is advantageously one which is, or remains, homogeneous at room temperature, such as at 25°C.

The additive has a large molecular mass, in particular an average molecular mass of at least 100 kg/mole, advantageously at least 150 kg/mole, advantageously at least 200 kg/mole, advantageously at least 250 kg/mole. Advantageously, the additive is a compound which decreases the thermodynamic stability of the dope solution. That is, addition of the additive to the dope solution (polymer P + solvent S) shifts the spinodal curve in the ternary phase diagram (see Fig. 1) closer towards the locus of the dope solution, i.e. to the left in Fig. 1. One way of indicating the degree of thermodynamic stability of a dope solution is through the coagulation value.

The coagulation value is a measure of thermodynamic stability of a solution. It is defined as the amount of a 50/50 (by weight) water/solvent mixture that needs to be added to the dope solution (at room temperature) for causing a visually observable remarkable coagulation which does not redissolve at 25°C in 24h. The notion of coagulation value has been described by Jeong-Hoon Kim and Kew-Ho Lee in Effect of PEG additive on membrane formation by phase inversion, Journal of Membrane Science 138 (1998), pages 153-163. The coagulation value can be determined by titrating the water/solvent mixture (same solvent as used in the dope solution) to the dope solution under continuous agitation, until the dope solution changes from optically transparent to turbid.

It has been found that with a coagulation value of 10% or less, the dope solution, including the additive, optimally evolves along the desired path to form membranes with desired isotropic layers. The coagulation value is expressed with respect to a 50/50 by weight water/solvent mixture. The coagulation value is advantageously 8% or less, advantageously 6% or less. The coagulation value is advantageously at least 0.5%, advantageously at least 1%, advantageously at least 1.5%, advantageously at least 2%. The additive is therefore added in a suitable quantity in order to obtain the desired coagulation value.

Without wishing to be bound by theory, one mechanism which allows for steering or controlling the path that the dope solution follows during phase inversion, is (dynamic) viscosity. The additive increases the viscosity of the dope solution, in particular due to its high molecular mass. It has now been found that, at the onset, adding more additive to the dope solution will gradually increase viscosity of the system. However, present inventors have remarked that, at a certain amount of additive, the viscosity of the dope solution suddenly increases more than proportionally. When setting out graphically viscosity ($\mu$) against weight fraction of additive (%A) in the solution, the viscosity curve follows the shape as shown in Fig. 2. It has been found that dope solutions with the indicated coagulation values lie in the region in which viscosity increases more than proportionally, i.e. to the right of the dashed line in Fig. 2. In the region left of the dashed line in Fig. 2, the solution is believed to behave like a dilute polymer system, where chains are not interacting with each other. For weight fractions, or concentrations of additive in the dope which lie to the right of the dashed line in Fig. 2, a large increase of viscosity is observed. Without wishing to be bound by theory, it is believed that in this region, the polymer molecules in solution become entangled and form a physical network, strongly increasing the viscosity of the dope. The concentration corresponding to the dashed line may refer to a critical concentration C. The dope solution has a (dynamic) viscosity of at least 75 kPa.s at room temperature (25°C).

It will be convenient to note that the dope solution, without the additive, would have a significantly larger coagulation value. Addition of the additive to the dope solution will therefore decrease the thermodynamic stability of the dope system. The dope solution advantageously comprises at least 0.5% by weight of the additive, advantageously at least 1% by weight, advantageously at least 1.5% by weight, advantageously at least 2% by weight. Addition of too much additive would make the dope solution unstable and therefore immiscible. Therefore, the dope solution advantageously comprises at most 30% by weight additive, advantageously at most 25% by weight, at most 20% by weight, or at most 15% by weight.

The additive is advantageously an organic compound, advantageously a hydrophilic polymer. The additive is advantageously one or a combination of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), and polyethylene glycol (PEG). In addition, analogs thereof, grafted variants thereof and copolymers containing any of the above compounds, such as copovidone can be contemplated. Such compounds are generally referred to as pore formers and can be removed in a coagulation post-treatment step, such as by washing in a bleach solution (e.g. for PVP). Some of the above compounds, such as PEG, may have non-solvent properties, and are sometimes referred to as non-solvents.

The additive can comprise, or consist of, polyethylene glycol (PEG). In particular, PEG grades having an average molecular mass of 108 kg/mole, 218 kg/mole and 511 kg/mole are commercially available. Alternatively, the additive can comprise, or consist of polyvinyl pyrrolidone (PVP) or any of its variants or analogs. PVP is available in various molecular masses as will be described further below. In addition, or alternatively, the additive can be a mixture of compounds, e.g. compounds having different molecular masses, which are mixed in appropriate quantities to obtain an average molecular mass of 100 kg/mole or more. A possible example is a mixture of PVP and copovidone. Where the additive is a mixture of compounds, these compounds may be mixed prior to being added to the dope solution, or may be added separately to the dope solution in order to obtain the desired coagulation value.

The dope solution can comprise additional compounds and filler materials, which may remain in the final membrane. Possible filler materials can be an amine, such as but not limited to one or a combination of: monoethanolamine (MEA), diethanolamine (DEA), polyethylenimine, aminopropyl-trimethoxysilane and polyethylenimine-trimethoxysilane. The filler material can be an amide or amine containing polymer, such as but not limited to one or a combination of: polyamide (PA), polyurethane (PUR), polyvinylamine (PVAm) and melamine. The filler material may be inorganic, such as one or a combination of $TiO_2$, $HfO_2$, $Al_2O_3$, $ZrO_2$, $Zr_3(PO_4)_4$, $Y_2O_3$, $SiO_2$, carbon, possibly on Pt, Ru or Rh support, $BaSO_4$, BaTiOs, perovskite oxide powder materials, zeolites, metal-organic frameworks (MOF) and silicon carbides. Functionalized variants of the filler materials (such as aminated, quaternary ammonium groups, sulfonated, acrylated) can be used. Combinations of the above organic and inorganic materials can be used as well as filler material.

The solution can be prepared by first dissolving the polymer in the solvent, followed by adding the additive to the polymer solution, advantageously under constant agitation. The solution is advantageously such that the polymer and the additive are completely soluble in the solvent - at the proportions used - at low to moderate temperatures, such as at room temperature, or between 25°C and 50°C. It may be advantageous to add a non-solvent to the dope solution, in particular an organic non-solvent such as glycerol or PEG (e.g. low molecular weight PEG with e.g. molecular mass of 10000 g/mole or less). Organic non-solvents are generally less harsh than water. The non-solvent content in the dope solution can be between 1% and 20% by weight, such as between 2% and 15% by weight, advantageously at least 4%, or at least 5% by weight. It is advantageous to mix the solvent and non-solvent prior to adding the polymer.

Next, the dope solution is cast to form a cast layer. Casting can be performed by any suitable method, such as by using a knife blade, slot coating, etc. The solution can be heated to an elevated temperature for casting, e.g. between 40°C and 80°C, particularly between 50°C and 65°C, and the solution is advantageously cast at these temperatures. The solution can be cast on any suitable substrate, which may be porous, such as a fabric, woven or nonwoven sheet, or may be non-porous, such as metal or glass plates. The substrate may be planar. It is possible to cast the solution as a layer without substrate or support, e.g. as a liquid (viscous) film. Alternatively, the solution can be cast as an annular layer, such as for forming hollow fibres, or any other suitable shape.

According to an aspect of the invention, the cast layer is subjected to vapour induced phase separation. The cast layer is exposed to a vapour phase, i.e. a gaseous phase comprising a vapour of a non-solvent. Exposure to the vapour phase can be single-sided, e.g. only one (external or outer) surface is exposed (but not the opposite one), or double-sided, e.g. also the opposite surface is exposed, possibly simultaneously, to the vapour phase. The vapour phase is in particular a water vapour phase, e.g. humid air. Humid air having a relative humidity of at least 70%, or at least 80% is advantageously used. The relative humidity can be at least 90%, such as 100%. The vapour phase is advantageously at a temperature of at least 25°C, e.g. between 30°C and 60°C, or between 40°C and 80°C. Advantageously, the cast layer is exposed to humid air having a water concentration (absolute humidity) of at least 10 $g/m^3$, advantageously at least 20 $g/m^3$, advantageously at least 25 $g/m^3$ is used. The exposure time may depend on the particular dope solution (e.g. dependent on amount of polymer and/or amount of additive), and typically depends on temperature, with exposure times decreasing with increasing temperature of the vapour phase. Suitable exposure times are between 1 s, or less, and 300 s, e.g. between 0.5 s and 200 s, between 1 s and 60 s.

The vapour induced phase separation is followed by immersion precipitation in a coagulation bath. The coagulation bath may comprise, or consist of a non-solvent in liquid state. It is advantageous when a same non-solvent is used in the coagulation bath and for the vapour phase, in particular water. The coagulation bath is advantageously at a temperature between 20°C and 80°C, in particular between 25°C and 80°C, or between 30°C and 70°C, e.g. 40°C or 60°C.

Advantageously, the water vapour phase can be obtained by providing a closed air chamber above the coagulation bath. The closed air chamber is fluidly connected to the coagulation bath, and collects the vapour emanating from the warm bath. The air chamber can further be equipped with a suitable climate control unit, e.g. for temperature and/or humidity control.

The membrane obtained following immersion precipitation in the coagulation bath can further be subjected to known post-treatment steps, such as drying and washing with bleach solution, e.g. to remove pore formers such as PVP. Yet additional post-treatment steps may comprise a surface treatment lending a surface condition suitable for an intended use, e.g. a plasma treatment for making the membrane hydrophobic.

Membranes obtained by methods described herein feature a generally isotropic layer extending from one surface of the membrane over a thickness which cannot be achieved by prior art methods. The one surface refers to an outer surface of the membrane, e.g. a top surface of the cast layer which has been exposed to the water vapour phase. The methods described herein advantageously allow for tuning the thickness and pore structure of the isotropic layer through appropriate selection of the composition of the dope solution and of the coagulation parameters (e.g. exposure time and temperature of vapour phase). Thicknesses of the isotropic layer of at least 30 $\mu$m, at least 50 $\mu$m, at least 100 $\mu$m, at least 150 $\mu$m, at least 200 $\mu$m, at least 250 $\mu$m, and up to 700 $\mu$m, 800 $\mu$m, 900 $\mu$m and even 1000 $\mu$m can be obtained. The isotropic layer advantageously extends from one outer surface of the membrane through greater than about 50%, advantageously greater than about 70%, advantageously greater than about 80% of the thickness of the membrane. Advantageously, the isotropic layer extends throughout the thickness of the membrane, from one surface to the opposite one.

Membranes obtained by methods described herein advantageously do not comprise a dense skin layer. In other words, these membranes have a porosity and/or pore size at, or close to, the surface about equal to the bulk porosity and the pore size, respectively, within the isotropic layer, e.g. differing by not more than 20% (the porosity and/or pore size in proximity of the (outer) surface is generally slightly smaller than the bulk porosity and pore size of the isotropic layer. Generally, these membranes have average pore sizes (in the isotropic layer) in the micrometre range, i.e. between about 0.1 $\mu$m and about 20 $\mu$m, and advantageously between about 0.1 $\mu$m and about 10 $\mu$m, advantageously about 5 $\mu$m or less, and will be referred to as microporous membranes hereinbelow.

The surface porosity at the surface (of the isotropic layer), defined as the ratio of open (porous) area to total area is advantageously at least 12%, advantageously at least 15%, advantageously at least 18%, advantageously at least 20%. Surface porosity can be determined by image analysis. The bulk porosity of the isotropic layer, and possibly of the entire membrane, is advantageously at least 70%, advantageously at least 80%, and can amount up to 90%.

The term isotropic (or the isotropic region or layer), as used herein, refers to a region or layer of generally uniform pore size and pore structure. Pore size uniformity can be expressed as the ratio of the size of the smallest pores (on average) to the size of the largest pores (on average) within the isotropic region. The size of the largest and smallest pores can be determined by the capillary flow porometry method as will be described further below. Advantageously, isotropic layers in membranes described herein have a pore size uniformity of at least 0.4, advantageously at least 0.5.

Membranes obtained by methods described herein advantageously have a high strength. The ultimate tensile strength is advantageously at least 2.5 MPa, advantageously at least 3 MPa. The elongation at rupture is advantageously at least 10% stain, advantageously at least 12% strain. Membranes obtained herein advantageously feature a low compressibility under applied differential pressure. The relative compression of the membrane at 1 bar differential pressure is advantageously 40% or less, advantageously 30% or less, or even 25% or less.

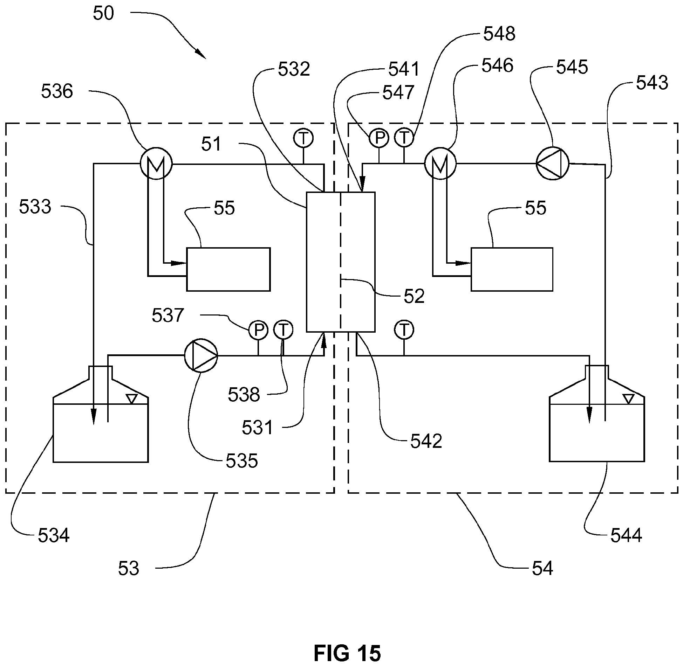

Fig. 15 shows an example membrane distillation unit 50 in which membranes according to aspects of the present invention can be used. Unit 50 is a so called direct contact membrane distillation (DCMD) unit. A lab-scale DCMD unit was used for evaluating membrane distillation performance. Unit 50 comprises a membrane module 51 comprising a flat-sheet (planar) membrane 52 of the kind as described hereinabove. The membrane 52 separates the unit 50 in a feed side part 53 and a permeate side part 54. Membrane module 51 comprises a feed inlet 531 and a feed outlet 532, at one side of the membrane 52, and a permeate inlet 541 and permeate outlet 542 at the other side.

The feed side part 53 comprises a fluid circuit 533 fluidly connected to the feed inlet 531 for supplying the feed to the module 51 and fluidly connected to the feed outlet 532. Circuit 533 can be fluidly connected to a feed reservoir 534. A fluid pump 535 and/or a heat exchanger 536 (for temperature adjustment of the feed) can be coupled to the circuit 533. Likewise, the permeate side part 54 comprises a fluid circuit 543 fluidly connected to the permeate inlet 541 and to the permeate outlet 542 of module 51. Permeate circuit 543 can be fluidly coupled to a permeate tank 544. A fluid pump 545 and/or a heat exchanger 546 can be coupled to the circuit 543 for pressure and temperature adjustment respectively. Pressure gauges 537, 547 and temperature gauges 538, 548 provide for pressure and temperature control of the feed and permeate circuits 533, 543, respectively. In the example of Fig. 15, the fluids at the feed side and at the permeate side are made to pass along the membrane 52 in a counter-current flow. Other kinds of flow can be contemplated, such as cross-flow or concurrent flow.

Aspects described herein will be illustrated by the following nonlimiting examples.

## Materials and methods

N-Methyl-2-pyrrolidone (NMP) was purchased from Acros Organics. Different grades of polyethersulfone (PESU) and polyvinylpyrrolidone (PVP) were purchased from BASF. In the following examples, PESU E2020 ($M_w$ = 48 000 g/mol) and PESU E6020 ($M_w$ = 75 000 g/mol), and PVP K30 ($M_w$ = 50 000 g/mol), PVP K80 ($M_w$ = 850 000 g/mol), PVP K90 ($M_w$ = 1 400 000 g/mol) and Kollidon® VA64 copovidone ($M_w$ = 45 000-70 000 g/mol), which is a vinylpyrrolidone-vinyl acetate copolymer, were used. $M_w$: molecular mass.

In all following examples, the following procedure was used, except where otherwise noted. The dope solution was prepared using a Niemann High Speed Dissolver 4. N-Methyl-2-pyrrolidone (NMP) was used as solvent and glycerol was used as a non-solvent in the polymer solution, unless stated otherwise. NMP and glycerol were mixed first. Next, the polymer (PESU) was slowly added to the NMP/glycerol mixture under constant stirring. After complete dissolution of the PESU, the additive (PVP and/or VA64) was added to obtain a dope solution.

The dope solution was heated to 60°C before casting. The dope was casted over an aluminium plate with a preformed notch of 250 µm using a smoothed glass plate. Thereafter, the plate was exposed to humid air for a defined amount of time and quenched in a coagulation bath of water at a defined temperature for two hours. The obtained membranes were treated with hypochlorite (pH 8, 2000 ppm, 40°C) to degrade and remove the PVP. A commercial plasma coating apparatus CD1000 Nanofics, Europlasma NV (Oudenaarde, Belgium) was used to coat the membranes with Nanofics® in a low pressure plasma polymerization process.

The viscosity of the dope solution was measured at room temperature using an Elcometer 2300 RV. For determining the coagulation value, a 50/50 wt% water/NMP mixture was added to 100 g dope under constant stirring and it was optically determined when the solution changed from transparent to turbid (i.e. when the demixing point was obtained).

For the porosity measurements a membrane sample was cut with a circular mold with diameter of 5 cm. The analytical balance used in these experiments was a MC1 Research RC210P (Sartorius GmbH, Goettingen, Germany). The porosity was determined using the density of the polymer according to Jian-hua Cao et al., Microporous PVDF-HFP-based polymer membranes formed from supercritical CO2 induced phase separation, Chinese Journal of Polymer Science, 2008, 26:01, pages 13-21, using the equation suggested by Smolders, K. and Franken, A.C.M., Terminology for Membrane Distillation, Desalination, 1989, 72 (3), pages 249-262, ISSN 0011-9164:

$$\varepsilon = 1 - \frac{\rho_m}{\rho_{pol}} \qquad (1)$$

with $\rho_m$ and $\rho_{pol}$ the density of the membrane and the polymer respectively in g/cm$^3$. The membrane density is obtained by dividing the membrane mass by the volume of the sample.

The liquid entry pressure (LEP) is the minimum pressure at which water wets the membrane pores. The method used to determine the LEP is described by Khayet et al., Preparation and characterization of polyvinylindene fluoride membranes for membrane distillation, Industrial & Engineering Chemistry Research, Vol 40, Pages 5710-5718, ISSN 0888-5885. The pressure is increased stepwise with 0.1 bar each 30 seconds until a flow is detected.

A Porolux™ 1000 device (Porometer, Eke, Belgium) using the wet/dry capillary flow porometry method measured the pore size distribution, bubble point pore size (i.e., largest pore size), average and smallest pore size, as described by Francis et al., Performance evaluation of the DCMD desalination process under bench scale and large scale module operating conditions, Journal of Membrane Science, Vol. 455, 1 April 2014, Pages 103-112, ISSN 0376-7388. Porefil with a liquid surface tension of 16 mN/m was used as wetting liquid and the shape factor was assumed to be 1.

A cold field emission scanning electron microscope (SEM) type JSM6340F (JEOL, Tokyo, Japan) was used to study membrane cross-sections at an acceleration voltage of 5 keV. Cross-sections were obtained by a cross-section polisher type SM-09010 (JEOL, Tokyo, Japan) using an argon ion beam. All samples were coated with a thin Pt/Pd layer (~1.5 nm) using a Cressington HR208 high-resolution sputter-coater (Watford, England) to avoid charging by the e-beam. The cross sections were analysed for determining surface porosity with ImageJ image processing program.

The mechanical properties of the membranes were determined by tensile testing (Instron 5582) according to the ASTM D638 using a strain rate of 10 mm/min at 23°C.

Compression tests were carried out by Techspert bvba (Ghent, Belgium), using a Instron 5800R electromechanical test machine and a 100 N load cell. A circular membrane was placed between two rigid compression platens. The displacement of the top compression platen, related to the membrane thickness reduction, was directly measured using a camera monitoring method. The load rate was 20 $\mu$m/min. The resolution of this measurement was $\pm$ 1.5 $\mu$m.

**Example 1: Membrane preparation**

A number of dope compositions were prepared according to the formulation: 18% polymer (PESU), 9% PVP, 9% Glycerol and 64% NMP (percentage values by weight). The grade of PESU and PVP used in each composition is included in Table 3. In some compositions, a mixture of PVP and copovidone VA64 was used, the total amount of both equalling 9% by weight of the dope composition. The weight fractions of the individual compounds is indicated in the table. These dope compositions were used to prepare membranes under different conditions of exposure time to the vapour phase (humid air) and temperature of the coagulation bath. The coagulation bath was a water bath and its temperature directly affects the temperature and water concentration of the humid air in the vapour chamber just above, as indicated in Table 1.

Table 1: The temperature of coagulation bath and resulting temperature and water concentration conditions in the vapour chamber.

| Temperature bath | Temperature air | Relative humidity | Concentration of water in air |
|---|---|---|---|
| °C | °C | % | g/m3 |
| 40 | 30.5 | 100% | 31 |
| 60 | 40.5 | 100% | 53.3 |

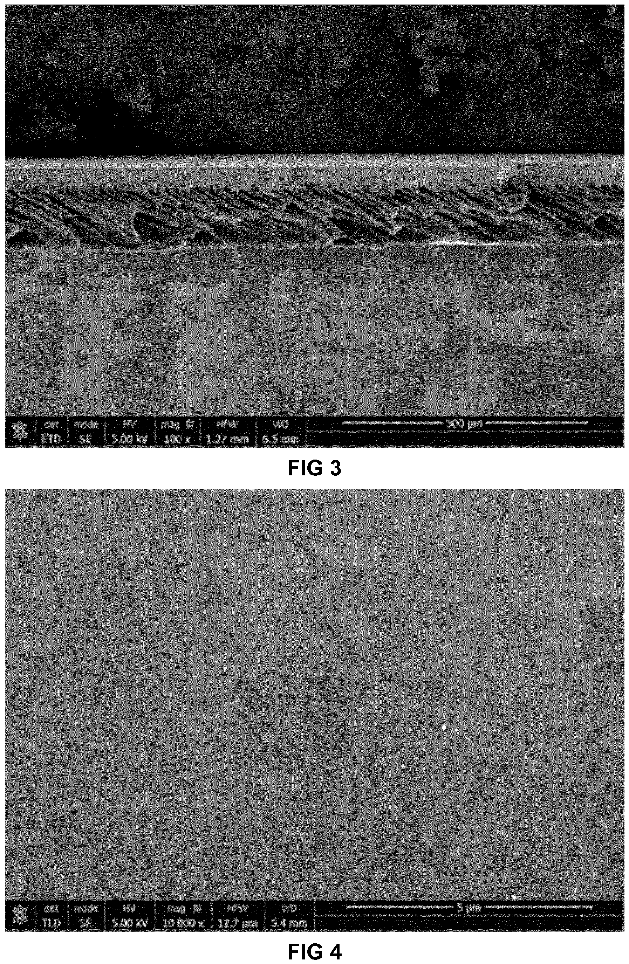

The experiments 1, 2, 5, 9-16, 24, 27 and 28 in Table 3 are comparative and the experiments marked with "pores only below 0.05 $\mu$m" or "no pores above 0.1 $\mu$m" refer to membranes where a dense skin was formed with a pore size much smaller compared to the isotropic region just below. This is clear from the SEM images of the membrane of experiment No. 11 shown in Figs. 3 and 4. These membranes were obtained from dope compositions with high coagulation values, i.e., compositions which in the ternary phase diagram would be located remote from the spinodal. These dope compositions are typically characterised by a relatively low viscosity. The membrane shown in Figs. 3 and 4 was obtained from dope composition PES4. For dope compositions PES3, PES4, PES5, PES6 and PES19, no microporous membrane could be obtained even after an exposure time to humid air of 300s, indicating that a dense skin was formed with much smaller pore size.

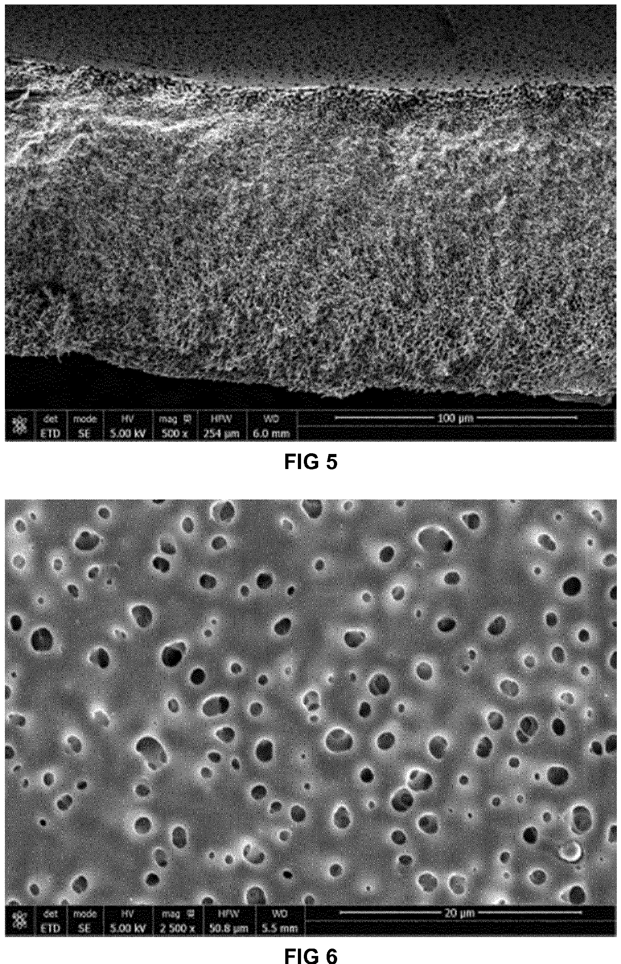

Comparing the top surface in Fig. 4 with the top surface in Fig. 6 reveals the isotropic character of the membrane of Figs. 5 and 6 even at its skin layer. The membrane of Figs. 5 and 6 was obtained from experiment No. 3 with a dope composition close enough to the spinodal.

It can be derived from Table 3 that with longer exposure times to humid air, the pore size increases. Humid air is taken up by the dope solution, shifting the composition closer to the demixing point, favoring spinodal demixing over gel formation. At higher temperatures, the relative humidity of the coagulation chamber is higher, causing a quicker uptake of the water vapor by the dope solution and hence, higher pore sizes are obtained.

What can be noticed from Table 3 however, is that for the membranes in which pores are detected, the difference between the maximum pore diameter, the minimum pore diameter and the average pore diameter is small, hence indicating a membrane which is generally isotropic throughout its thickness. This is also clear from the SEM images of the membranes of experiment Nos. 3 and 6 shown in Figs. 5, 6 and 7, 8 respectively. The mechanical strength was measured for the membrane of experiment No. 6 and resulted in an ultimate tensile strength of about 3.7 MPa and rupture at 14% elongation.

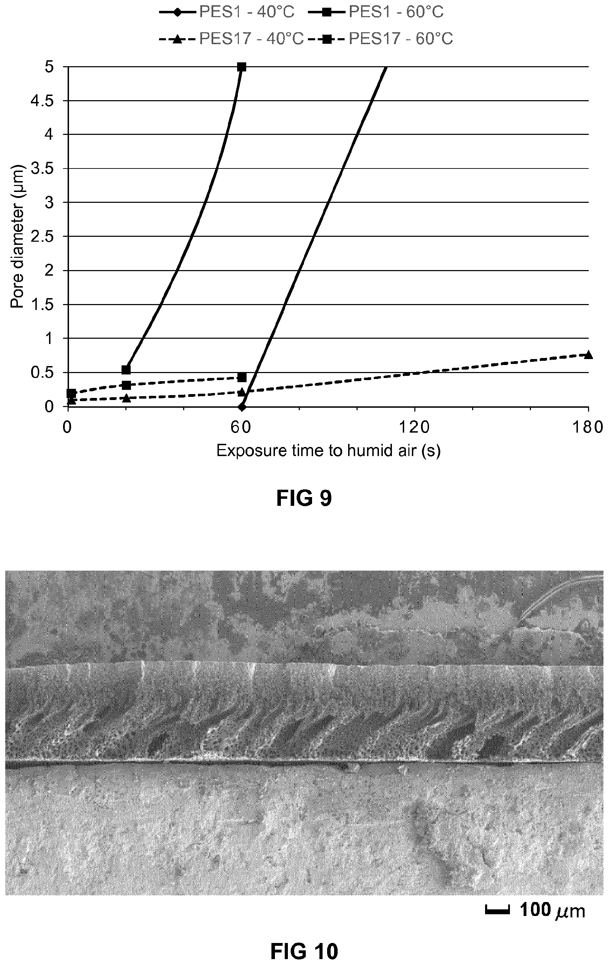

Fig. 9 graphically shows the evolution of the pore diameter with the exposure time to humid air (vapour phase exposure), for two dope compositions PES1 and PES17 and for different temperatures (see Table 3 for details on dope composition). Even though the graph relates to the maximum pore diameter, corresponding to the bubble point test method, the behaviour is equivalent for the average and minimum pore diameter, which, as evident from Table 3, are in close agreement. It can be noticed from Fig. 9 that dope composition PES17 is much less sensitive to coagulation parameters, in particular exposure time, and to a lesser extent temperature, compared to dope composition PES1.

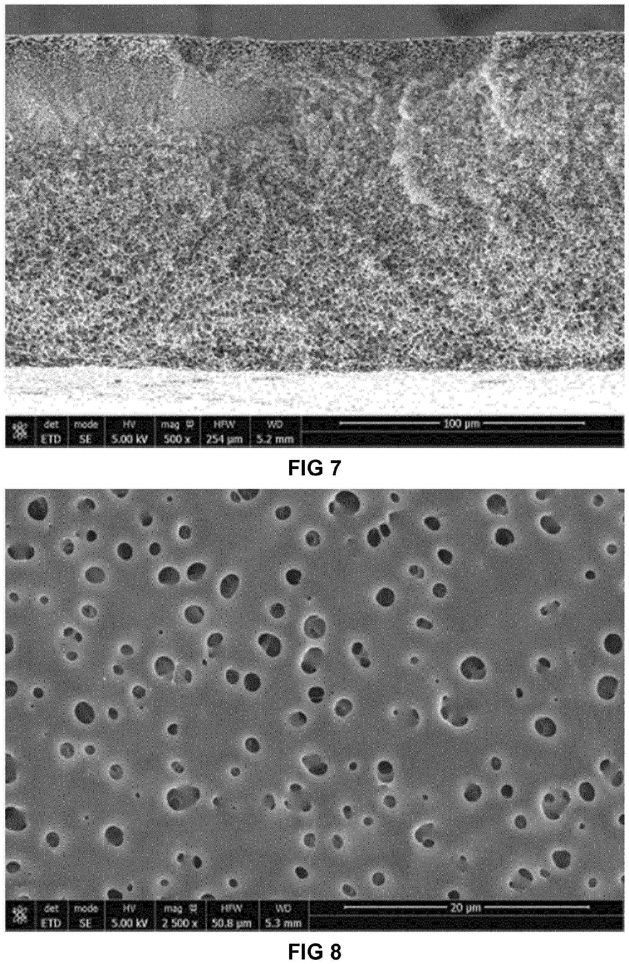

Generally, a longer exposure time for a given temperature will increase the thickness of the isotropic region, until the opposite surface is reached (in case of single-sided exposure to the vapour phase). By way of example, in an experiment with dope composition PES18, and with same bath temperature and exposure time as experiment No. 25 of Table 3; an isotropic layer of 140 $\mu$m thickness was obtained, about half the total membrane (casting) thickness of 400 $\mu$m. Highly asymmetric macrovoids formed in the other part of the membrane thickness, as is evident from Fig. 10. Extending the exposure time to humid air to 80 s allowed for increasing the thickness of the isotropic region to 220 $\mu$m. Figs. 5 and 7 show examples of membranes which are fully isotropic, i.e. the isotropic region extends from one surface until the opposite surface. These membranes were obtained by single-sided exposure.

Provided the generally isotropic region starts at the membrane surface, the surface porosity will generally remain largely independent on coagulation parameters. Surface porosity was determined with image analysis and amounted to about 20%.

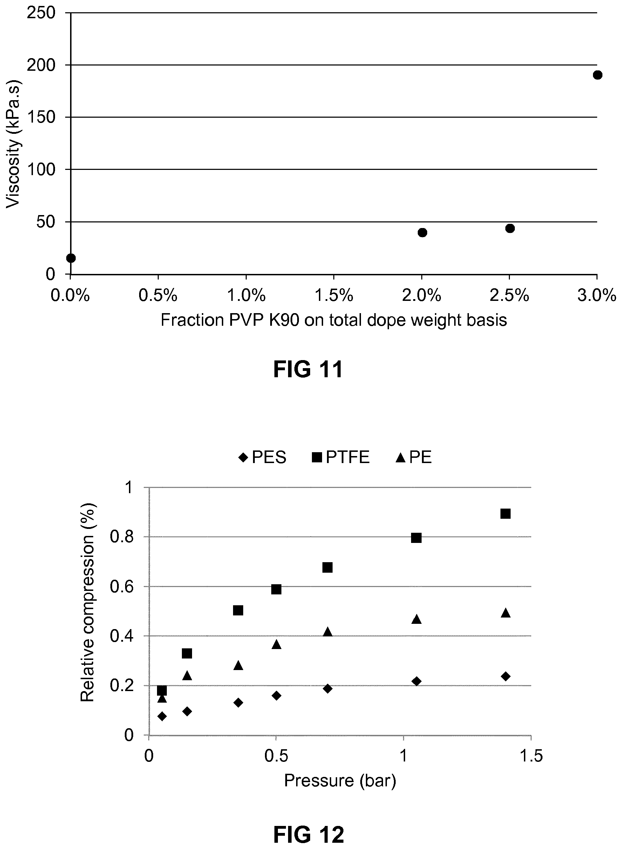

Dope compositions PES5, PES6 and PES17 are characterised by differing fractions of PVP K90 and copovidone VA64 totalling a same amount of 9% by weight in the dope solution and for an otherwise identical polymer/solvent/non solvent solution. Fig. 11 shows that the viscosity of these dope compositions suddenly increases between 2.5% and 3% PVP K90 content, whereas in the region 0%-2.5% PVP K90, viscosity evolves much more gradually. Without wishing to be bound by theory, it appears that in the latter region, the solution behaves like a dilute polymer system, where chains are not interacting with each other. With the fraction PVP K90 increasing above 2.5%, a large increase of viscosity is observed, which would appear to correlate with the critical concentration, above which polymer molecules in solution become entangled and form a physical network, strongly increasing the viscosity of the dope. A similar behavior is observed when working with low molecular weight PESU (E2020), notably in dope compositions PES18 and PES19. No pores were detected for the PES19 dope with relatively low viscosity. For the higher viscosity dope PES18, microporous membranes with isotropic layer were produced upon exposure to humid air.

**Example 2: Membrane distillation membranes**

The membrane prepared in experiment No. 3 of Table 3, based on PES1 dope composition, exposure time to humid air of 60s and 40°C coagulation bath had an isotropic region throughout. This membrane was selected for evaluation of the membrane distillation performance based on sufficiently low pore size to avoid wetting, the high porosity and symmetric cross-section. The membrane is denoted PES membrane hereinbelow. A surface coating was applied on both sides of this membrane using the plasma coating apparatus indicated above in order to make it hydrophobic. In this case, a water contact angle of about 120° was obtained, which is similar to the water contact angle of a polyethylene (PE) membrane used in commercial membrane distillation modules (Solupor®, Lydall). This PE membrane is a stretched membrane. Further properties of these membranes are presented in Table 2. The vacuum plasma process enables to coat the membrane inside the membrane pores and therefore a completely hydrophobic membrane structure is obtained. A sufficiently high liquid entry pressure (LEP) was obtained for the PES membrane, with a maximum pore size of 0.6 $\mu$m. The PES membrane has a higher porosity and higher thickness compared to the PE membrane.

Table 2: Properties of the PES membrane according to aspects of the invention compared to commercial PE membrane. $\theta_{water}$ = water contact angle; $d_{max}$ = maximum pore diameter as determined through the bubble point test method; $\varepsilon_{bulk}$ = bulk porosity; $\delta$ = thickness.

| Membrane | LEP (bar) | $\Theta_{water}$ (°) | $d_{max}$ ($\mu$m) | $d_{av}$ ($\mu$m) | $\varepsilon_{bulk}$ (%) | $\delta$ ($\mu$m) |
|---|---|---|---|---|---|---|
| PES | 2.6 $\pm$ 0.3 | 118 $\pm$ 2 | 0.6 $\pm$ 0.1 | 0.42 $\pm$ 0.04 | 83 $\pm$ 2 | 160 $\pm$ 11 |

(continued)

| Membrane | LEP (bar) | $\Theta_{water}$ (°) | $d_{max}$ (μm) | $d_{av}$ (μm) | $\varepsilon_{bulk}$ (%) | $\delta$ (μm) |
|---|---|---|---|---|---|---|
| PE | 3.9 ± 0.1 | 120 ± 1 | 0.43 ± 0.02 | 0.30 ± 0.02 | 76 ± 1 | 99 ± 7 |

Membrane compression tests were performed with the PES and PE membrane above, and with a commercial stretched PTFE membrane (Tetratex®, Donaldson) following the procedure indicated above. Results are shown in Fig. 12. These tests show the benefit of a phase inverted structure over stretched membranes. While the PE and PTFE membrane compress for 50 % and 90 % respectively at a pressure of 1.4 bar, the PES membrane only compresses for 24% of its initial thickness. This is an important advantage for membrane contactor applications, and membrane distillation in particular.

### Example 3: Membrane distillation performance

Membrane distillation performance was evaluated with a lab-scale DCMD unit, of a type as shown in Fig. 15. The lab-scale DCMD unit in particular had a feed and permeate channel with a width of 6 cm, a length of 18 cm and a height of 2 mm. Temperature at the feed inlet and at the permeate outlet are kept constant at 60°C and 45°C respectively for all experiments using two heating baths (55, see Fig. 15, Huber, Ministat 230w-cc-NR, Offenburg, Germany) and monitored using four thermocouples (Thermo Electric Company, PT100 TF, Balen, Belgium). The feed and distillate (permeate) are circulated counter-currently on their respective sides of the membrane 52 using peristaltic pumps (Watson-Marlow, 520DuN/R2, Zwijnaarde, Belgium). The flow rate was kept constant at 0.13 m/s. The flux was measured by evaluating the weight variations in the feed and distillate tanks, using an analytical balance (Sartorius GmbH, ED8801-CW, Goettingen, Germany). The electrical conductivity at the feed and permeate side were monitored by portable conductivity meters (WTW GmbH, pH/Cond 340i, Weilheim, Germany) and retention was calculated.

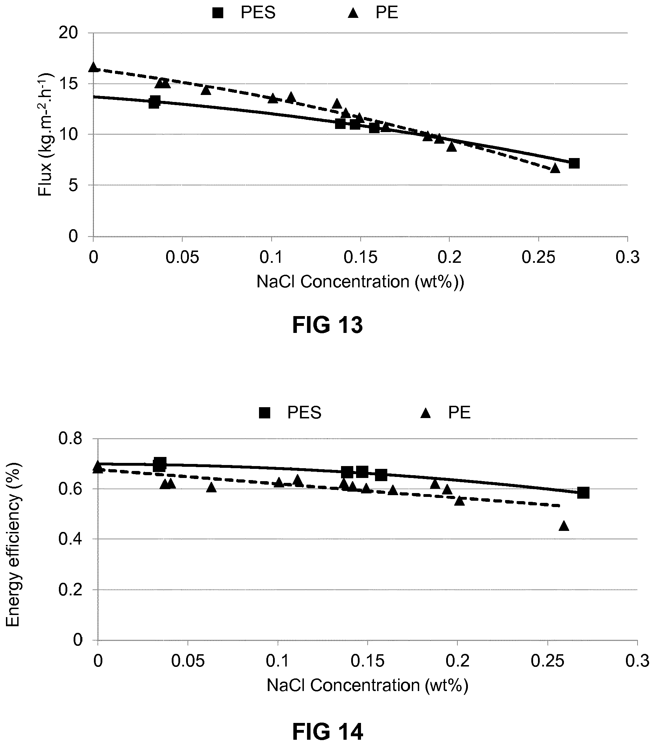

Direct contact membrane distillation performance of the PE and PES membranes of Example 2 was evaluated using the setup described above. Different concentrations of NaCl (technical grade, Sigma Aldrich) were measured for at least 2 hours and the results are shown in Figs. 13 and 14. The flux of the PE membrane is slightly higher at low concentrations, whereas at higher salinity similar fluxes are obtained (Fig. 13). This can be explained by the larger thickness of the PES membrane, which is a disadvantage at low salinities, but becomes increasingly important for sustaining sufficient driving force over the membrane at higher salinities. At lower temperature differences over the membrane this effect might become even more pronounced. The energy efficiency is shown in Fig. 14. The efficiency is higher for the PES membrane, which is mainly caused by the slightly higher porosity.

Table 3: Composition and viscosity of the dope; coagulation parameters of the phase inversion process; casting thickness and pore size of the membranes so obtained ($d_{max}$: diameter of largest pores; $d_{av}$: mean pore diameter; $d_{min}$: diameter of smallest pores; N/A: not available).

| Experiment No. | Dope composition # | PESU grade | PVP grade | Viscosity (kPa.s) | Coagulation value (%) | Coagulation bath Temp. (°C) | Exposure time humid air (s) | Thickness (µm) | | $d_{max}$ (µm) (bubble point) | | $d_{av}$ (µm) | | $d_{min}$ (µm) | |
|---|---|---|---|---|---|---|---|---|---|---|---|---|---|---|---|
| | | | | | | | | Average | STDEV | Average | STDEV | Average | STDEV | Average | STDEV |
| 1 | PES1 | E6020 | K80 | 286 ± 5 | 2.6 | 40 | 1 | 174 | 3 | No dry curve : pores only below 0.05 µm | | | | | |
| 2 | PES1 | E6020 | K80 | 286 ± 5 | 2.6 | 40 | 20 | 259 | 28 | No dry curve : pores only below 0.05 µm | | | | | |
| 3 | PES1 | E6020 | K80 | 286 ± 5 | 2.6 | 40 | 60 | 185 | 8 | 0.31 | 0.05 | 0.24 | 0.01 | 0.17 | 0.03 |
| 4 | PES1 | E6020 | K80 | 286 ± 5 | 2.6 | 40 | 180 | 114 | 2 | 12 | 1 | 11 | 1 | 11 | 1 |
| 5 | PES1 | E6020 | K80 | 286 ± 5 | 2.6 | 60 | 1 | 270 | 18 | No dry curve : pores only below 0.05 µm | | | | | |
| 6 | PES1 | E6020 | K80 | 286 ± 5 | 2.6 | 60 | 20 | 206 | 44 | 0.54 | 0.09 | 0.49 | 0.09 | 0.27 | 0.10 |
| 7 | PES1 | E6020 | K80 | 286 ± 5 | 2.6 | 60 | 60 | 102 | 1 | 5 | 1 | 2.76 | 0.40 | 2.56 | 0.30 |
| 8 | PES1 | E6020 | K80 | 286 ± 5 | 2.6 | 60 | 180 | 100 | 1 | 42 | 4 | 38.72 | 2.00 | 35.94 | 2.00 |
| 9 | PES3 | E6020 | K30 | 19 ± 1 | N/A | 40 | 60 | 173 | 16 | No pores above 0.1 µm detected | | | | | |
| 10 | PES3 | E6020 | K30 | 19 ± 1 | N/A | 60 | 20 | 194 | 3 | No pores above 0.1 µm detected | | | | | |
| 11 | PES4 | E6020 | VA64 | 15.8 ± 0.5 | 4.6 | 40 | 60 | 170 | 3 | No pores above 0.1 µm detected | | | | | |
| 12 | PES4 | E6020 | VA64 | 15.8 ± 0.5 | 4.6 | 60 | 20 | 165 | 3 | No pores above 0.1 µm detected | | | | | |
| 13 | PES5 | E6020 | 2% K90 7% VA64 | 40 ± 1 | N/A | 40 | 60 | 173 | 9 | No pores above 0.1 µm detected | | | | | |
| 14 | PES5 | E6020 | 2% K90 7% VA64 | 40 ± 1 | N/A | 60 | 20 | 165 | 5 | No pores above 0.1 µm detected | | | | | |
| 15 | PES6 | E6020 | 2.5% K90 6.5% VA64 | 44.1 ± 0.4 | 5 | 40 | 60 | 178 | 10 | No pores above 0.1 µm detected | | | | | |

Continued from previous page

| Experiment No. | Dope composition # | PESU grade | PVP grade | Viscosity (kPa.s) | Coagulation value (%) | Coagulation bath Temp. (°C) | Exposure time humid air (s) | Total thickness (µm) | | $d_{max}$ (µm) (bubble point) | | $d_{av}$ (µm) | | $d_{min}$ (µm) | |
|---|---|---|---|---|---|---|---|---|---|---|---|---|---|---|---|
| | | | | | | | | Average | STDEV | Average | STDEV | Average | STDEV | Average | STDEV |
| 16 | PES6 | E6020 | 2.5% K90 6.5% VA64 | 44.1 ± 0.4 | 5 | 60 | 20 | 193 | 3 | No pores above 0.1 µm detected | | | | | |
| 17 | PES17 | E6020 | 3% K90 6% VA64 | 191 ± 5 | 4.8 | 40 | 1 | 168 | 6 | 0.10 | 0.03 | 0.09 | 0.01 | 0.08 | 0.00 |
| 18 | PES17 | E6020 | 3% K90 6% VA64 | 191 ± 5 | 4.8 | 40 | 20 | 157 | 5 | 0.13 | 0.05 | 0.13 | 0.05 | 0.11 | 0.06 |
| 19 | PES17 | E6020 | 3% K90 6% VA64 | 191 ± 5 | 4.8 | 40 | 60 | 167 | 4 | 0.22 | 0.02 | 0.20 | 0.03 | 0.18 | 0.04 |
| 20 | PES17 | E6020 | 3% K90 6% VA64 | 191 ± 5 | 4.8 | 40 | 180 | 146 | 22 | 0.77 | 0.09 | 0.62 | 0.24 | 0.52 | 0.19 |
| 21 | PES17 | E6020 | 3% K90 6% VA64 | 191 ± 5 | 4.8 | 60 | 1 | 174 | 5 | 0.20 | 0.04 | 0.19 | 0.04 | 0.17 | 0.05 |
| 22 | PES17 | E6020 | 3% K90 6% VA64 | 191 ± 5 | 4.8 | 60 | 20 | 158 | 5 | 0.32 | 0.05 | 0.30 | 0.03 | 0.28 | 0.04 |
| 23 | PES17 | E6020 | 3% K90 6% VA64 | 191 ± 5 | 4.8 | 60 | 60 | 142 | 10 | 0.43 | 0.12 | 0.42 | 0.12 | 0.36 | 0.09 |
| 24 | PES18 | E2020 | K80 | 78.2 ± 0.3 | N/A | 40 | 30 | 179 | 15 | No pores above 0.1 µm detected | | | | | |
| 25 | PES18 | E2020 | K80 | 78.2 ± 0.3 | N/A | 40 | 60 | 164 | 17 | 0.94 | 0.07 | 0.71 | 0.07 | 0.37 | 0.02 |
| 26 | PES18 | E2020 | K80 | 78.2 ± 0.3 | N/A | 60 | 20 | 158 | 5 | 0.32 | 0.05 | 0.30 | 0.03 | 0.28 | 0.04 |
| 27 | PES19 | E2020 | 2.5% K90 6.5% VA64 | 19.7 ± 0.6 | N/A | 40 | 60 | 151 | 2 | No pores above 0.1 µm detected | | | | | |
| 28 | PES19 | E2020 | 2.5% K90 6.5% VA64 | 19.7 ± 0.6 | N/A | 60 | 20 | 186 | 2 | No pores above 0.1 µm detected | | | | | |

## Claims

1. Method of preparing a porous membrane comprising an isotropic layer having a generally uniform pore size, extending from a first surface of the membrane through at least 50% of a thickness of the membrane, wherein the isotropic layer has a thickness of at least 50 μm, the method comprising:

   forming a homogeneous solution comprising at least 15% by weight of a polymer, a solvent and at least 0.5% by weight of an additive, wherein the polymer comprises a plurality of sulfone groups,
   casting the solution at a temperature between 40°C and 80°C to form a cast layer,
   exposing the cast layer to a vapour phase to induce phase separation followed by immersing the cast layer in a coagulation bath comprising water as a non-solvent,
   wherein the vapour phase is humid air having a relative humidity of at least 70%,
   **characterised in that** the additive is an organic compound or a mixture of organic compounds having an average molecular mass of at least 100000 g/mole, and **in that** the solution has a coagulation value between 0.5% and 10% with respect to a mixture of 50% water and 50% of the solvent on weight basis and a viscosity of at least 75 kPa.s at room temperature,

   wherein the coagulation value is determined by titrating an amount of the mixture of 50% water and 50% of the solvent on weight basis to the solution under continuous agitation, until the solution changes from optically transparent to turbid.

2. Method of claim 1, wherein the additive content in the solution is between 1% and 30% by weight.

3. Method of claim 1 or 2, wherein the additive comprises polyvinyl pyrrolidone, an analogue or a derivative thereof.

4. Method of any one of the preceding claims, wherein the additive has an average molecular mass of at least 250000 g/mole.

5. Method of any one of the preceding claims, wherein the solution further comprises at least 2% by weight of a non-solvent of the polymer.

6. Method of any one of the preceding claims, wherein the polymer is a polyethersulfone compound.

7. Method of claim 6, wherein the solution comprises at least 5% of an organic non-solvent of the polymer and at least 2% of the additive, wherein the additive is polyvinyl pyrrolidone, and wherein the coagulation value of the solution is between 2% and 6%.

8. Method of any one of the preceding claims, wherein the vapour phase is humid air having a relative humidity of at least 80%, and wherein the coagulation bath is at a temperature between 30°C and 80°C, and wherein the cast layer is exposed to the vapour phase for an exposure time between 1 s and 300 s.

9. Method of any one of the preceding claims, wherein the vapour phase is humid air having a relative humidity of at least 90%.


## Patentansprüche

1. Verfahren zum Herstellen einer porösen Membran, umfassend eine isotrope Schicht, die eine generell gleichförmige Porengröße aufweist, die sich von einer ersten Oberfläche der Membran durch mindestens 50 % einer Stärke der Membran erstreckt, wobei die isotrope Schicht eine Stärke von mindestens 50 μm aufweist, das Verfahren umfassend:

   Bilden einer homogenen Lösung, umfassend mindestens 15 Gewichts-% eines Polymers, ein Lösungsmittel und mindestens 0,5 Gewichts-% eines Additivs, wobei das Polymer eine Vielzahl von Sulfongruppen umfasst,
   Gießen der Lösung bei einer Temperatur zwischen 40 °C und 80 °C, um eine Gussschicht zu bilden,
   Aussetzen der Gussschicht einer Dampfphase, um eine Phasentrennung zu induzieren, und gefolgt von Eintauchen der Gussschicht in ein Koagulationsbad, umfassend Wasser als Nichtlösungsmittel,
   wobei die Dampfphase feuchte Luft ist, die eine relative Feuchtigkeit von mindestens 70 % aufweist,

**dadurch gekennzeichnet, dass** das Additiv eine organische Verbindung oder ein Gemisch organischer Verbindungen ist, die eine durchschnittliche Molekularmasse von mindestens 100.000 g/Mol aufweisen, und dass die Lösung einen Koagulationswert zwischen 0,5 % und 10 %, bezogen auf ein Gemisch aus 50 % Wasser und 50 % des Lösungsmittels auf Gewichtsbasis, und eine Viskosität von mindestens 75 kPa.s bei Raumtemperatur aufweist,

wobei der Koagulationswert durch Titrieren einer Menge des Gemischs aus 50 % Wasser und 50 % des Lösungsmittels auf Gewichtsbasis zu der Lösung unter kontinuierlichem Rühren, bis die Lösung von optisch transparent zu trüb wechselt, bestimmt wird.

**2.** Verfahren nach Anspruch 1, wobei der Additivgehalt in der Lösung zwischen 1 und 30 Gewichts-% ist.

**3.** Verfahren nach Anspruch 1 oder 2, wobei das Additiv Polyvinylpyrrolidon, ein Analogon oder ein Derivat davon umfasst.

**4.** Verfahren nach irgendeinem der vorherigen Ansprüche, wobei das Additiv eine durchschnittliche Molekularmasse von mindestens 250.000 g/Mol aufweist.

**5.** Verfahren nach irgendeinem der vorherigen Ansprüche, wobei die Lösung ferner mindestens 2 Gewichts-% eines Nichtlösungsmittels des Polymers umfasst.

**6.** Verfahren nach irgendeinem der vorherigen Ansprüche, wobei das Polymer eine Polyethersulfonverbindung ist.

**7.** Verfahren nach Anspruch 6, wobei die Lösung mindestens 5 % eines organischen Nichtlösungsmittels des Polymers und mindestens 2 % des Additivs umfasst, wobei das Additiv Polyvinylpyrrolidon ist und wobei der Koagulationswert der Lösung zwischen 2 % und 6 % ist.

**8.** Verfahren nach irgendeinem der vorherigen Ansprüche, wobei die Dampfphase feuchte Luft, die eine relative Feuchtigkeit von mindestens 80 % aufweist, ist und wobei das Koagulationsbad eine Temperatur zwischen 30 °C und 80 °C aufweist, und wobei die Gussschicht der Dampfphase über eine Einwirkzeit zwischen 1 Sekunde und 300 Sekunden ausgesetzt wird.

**9.** Verfahren nach irgendeinem der vorherigen Ansprüche, wobei die Dampfphase feuchte Luft ist, die eine relative Feuchtigkeit von mindestens 90 % aufweist.

## Revendications

**1.** Procédé de préparation d'une membrane poreuse comprenant une couche isotrope ayant une taille de pore généralement uniforme, s'étendant d'une première surface de la membrane à travers au moins 50 % d'une épaisseur de la membrane, dans lequel la couche isotrope a une épaisseur d'au moins 50 $\mu$m, le procédé comprenant :

la formation d'une solution homogène comprenant au moins 15 % en poids d'un polymère, un solvant et au moins 0,5 % en poids d'un additif, dans lequel le polymère comprend une pluralité de groupes sulfone, la coulée de la solution à une température comprise entre 40 °C et 80 °C pour former une couche coulée, l'exposition de la couche coulée à une phase vapeur pour induire une séparation de phase suivie par l'immersion de la couche coulée dans un bain de coagulation comprenant de l'eau en tant que non-solvant, dans lequel la phase vapeur est de l'air humide ayant une humidité relative d'au moins 70 %, **caractérisé en ce que** l'additif est un composé organique ou un mélange de composés organiques ayant une masse moléculaire moyenne d'au moins 100000 g/mole, et **en ce que** la solution a une valeur de coagulation comprise entre 0,5 % et 10 % par rapport à un mélange de 50 % d'eau et de 50 % du solvant sur la base du poids et une viscosité d'au moins 75 kPa.s à température ambiante, dans lequel la valeur de coagulation est déterminée par le titrage d'une quantité du mélange de 50 % d'eau et de 50 % du solvant sur la base du poids à la solution sous agitation continue, jusqu'à ce que la solution passe d'optiquement transparente à trouble.

**2.** Procédé selon la revendication 1, dans lequel la teneur en additif dans la solution est comprise entre 1 % et 30 % en poids.

**3.** Procédé selon la revendication 1 ou 2, dans lequel l'additif comprend du polyvinyle pyrrolidone, un analogue ou un dérivé de celui-ci.

**4.** Procédé selon l'une quelconque des revendications précédentes, dans lequel l'additif a une masse moléculaire moyenne d'au moins 250000 g/mole.

**5.** Procédé selon l'une quelconque des revendications précédentes, dans lequel la solution comprend en outre au moins 2 % en poids d'un non-solvant du polymère.

**6.** Procédé selon l'une quelconque des revendications précédentes, dans lequel le polymère est un composé de polyéthersulfone.

**7.** Procédé selon la revendication 6, dans lequel la solution comprend au moins 5 % d'un non-solvant organique du polymère et au moins 2 % de l'additif, dans lequel l'additif est du polyvinyle pyrrolidone, et dans lequel la valeur de coagulation de la solution est comprise entre 2 % et 6 %.

**8.** Procédé selon l'une quelconque des revendications précédentes, dans lequel la phase vapeur est de l'air humide ayant une humidité relative d'au moins 80 %, et dans lequel le bain de coagulation est à une température comprise entre 30 °C et 80 °C, et dans lequel la couche coulée est exposée à la phase vapeur pour un temps d'exposition compris entre 1 s et 300 s.

**9.** Procédé selon l'une quelconque des revendications précédentes, dans lequel la phase vapeur est de l'air humide ayant une humidité relative d'au moins 90 %.

**FIG 1**

**FIG 2**

EP 3 562 575 B1

**FIG 3**

**FIG 4**

18

**FIG 5**

**FIG 6**

**FIG 7**

**FIG 8**

FIG 9

FIG 10

**FIG 11**

**FIG 12**

**FIG 13**

**FIG 14**

**FIG 15**

## REFERENCES CITED IN THE DESCRIPTION

### Patent documents cited in the description

- US 6110369 A, Ditter
- EP 2609992 A
- KR 20130013679

### Non-patent literature cited in the description

- **M. MULDER.** Basic Principles of Membrane Technology. Kluwer Academic Publishers, 1996
- **JEONG-HOON KIM ; KEW-HO LEE.** Effect of PEG additive on membrane formation by phase inversion. *Journal of Membrane Science,* 1998, vol. 138, 153-163
- **JIAN-HUA CAO et al.** Microporous PVDF-HFP-based polymer membranes formed from supercritical CO2 induced phase separation. *Chinese Journal of Polymer Science,* 2008, vol. 26 (01), 13-21
- **SMOLDERS, K. ; FRANKEN, A.C.M.** *Terminology for Membrane Distillation, Desalination,* 1989, vol. 72 (3), ISSN 0011-9164, 249-262
- **KHAYET et al.** Preparation and characterization of polyvinylindene fluoride membranes for membrane distillation. *Industrial & Engineering Chemistry Research,* vol. 40, ISSN 0888-5885, 5710-5718
- **FRANCIS et al.** Performance evaluation of the DCMD desalination process under bench scale and large scale module operating conditions. *Journal of Membrane Science,* 01 April 2014, vol. 455, ISSN 0376-7388, 103-112